Europäisches Patentamt

(19) European Patent Office

Office européen des brevets

(11) Publication number : **0 638 946 A2**

(12) # EUROPEAN PATENT APPLICATION

(21) Application number : 94305032.8

(22) Date of filing : 08.07.94

(51) Int. Cl.[6] : **H01M 4/58, H01M 4/48**

(30) Priority : **12.07.93 US 90574**

(43) Date of publication of application :
**15.02.95 Bulletin 95/07**

(84) Designated Contracting States :
**AT BE CH DE DK ES FR GB GR IE IT LI NL PT SE**

(71) Applicant : **WILSON GREATBATCH LTD.**
**10,000 Wehrle Drive**
**Clarence New York 14031 (US)**

(72) Inventor : **Takeuchi, Esther S.**
**38 San Rafael Ct.**
**East Amherst, New York 14051 (US)**
Inventor : **Thiebolt III, William C.**
**318 Morgan Street**
**Tonawanda, New York 14150 (US)**

(74) Representative : **Cropp, John Anthony David et al**
**MATHYS & SQUIRE**
**100 Grays Inn Road**
**London, WC1X 8AL (GB)**

(54) **Preparation of silver vanadium oxide cathodes.**

(57)    Various methods for preparing a cathode having as active material silver vanadium oxide formed by chemical addition, reaction or otherwise intimate contact of a silver-containing compound and a vanadium-containing compound present in either an anhydrous mixture or a gel solution which may generate a preparation of silver vanadium oxide, is described. The present invention provides alternate preparation techniques for improving chemical control in the formation of a cathode for incorporation into an electrochemical cell.

EP 0 638 946 A2

## Background Of The Invention

### Field Of Invention

This invention relates to the manufacture of an alkali metal electrochemical cell or battery, and more particularly to new and improved methods of preparing silver vanadium oxide composite cathode material for use in high energy density batteries.

### Discussion Of The Prior Art

Solid cathode, liquid organic electrolyte alkali metal or lithium anode cells or batteries are used as the power source for implantable medical devices. The cathode of such a cell may have as active material carbon fluoride, a metal oxide, a mixed metal oxide such as silver vanadium oxide, or other suitable material as disclosed in U. S. Patent 4,830,940 to Keister et al., which patent is assigned to the assignee of the present invention and is incorporated herein by reference.

Preparation of cathode material containing a mixed metal oxide such as silver vanadium oxide for use in a lithium cell or battery has been known by a decomposition reaction. However, the decomposition method of preparation is accompanied by the evolution of gaseous products. Typically, the synthesis is carried out by first thermally decomposing a vanadium salt to produce vanadium pentoxide. A decomposable metal salt, preferably containing silver, is then blended with the vanadium pentoxide in water and the mixture is oven-dried. Following drying, the mixture is again blended and ground to ensure thorough intermingling of the constituents and the resulting homogeneous mixture is subsequently baked for a final heating/decomposition period. Depending on the starting materials used, this final heating/decomposition period can result in the release of toxic by-product gases. For example, if silver nitrate ($AgNO_3$) is used as the silver source, nitrous oxide type gases may be formed. Such a decomposition reaction for the preparation of silver vanadium oxide is:

$$AgNO_3 + V_2O_5 \rightarrow AgV_2O_{5.5} + NO_2 + O_2$$

Upon cooling, the baked material is blended with appropriate amounts of carbon black and graphite powder to enhance conductivity, and with a binder material, and then pressed to form the cathode. Such a method is described in more detail in U.S. Patent 4,310,609, to Liang et al., which patent is assigned to the assignee of the present invention and is incorporated herein by reference.

Accordingly, the present invention provides several alternate preparation methods for silver vanadium oxide by chemical addition, reaction, or otherwise intimate contact of a silver-containing component with a vanadium-containing oxide or acid compound to form a mixed metal oxide . One such method of the present invention includes intimately combining $AgVO_3$ with $V_2O_5$ in about a 2:1 mole ratio followed by thermal treatment of the mixed metal oxide to produce the desired silver vanadium oxide product. The reaction may be represented as:

$$2AgVO_3 + V_2O_5 \rightarrow 2AgV_2O_{5.5}$$

The addition reaction may be carried out at temperatures of from between about 300°C to 700°C, preferably at temperatures of between about 350°C to 550°C and most preferably at temperatures of between about 380°C to 400°C and may proceed to completion within about 2 to 24 hours. Lower temperatures require a longer reaction time. Longer reaction times and higher temperatures may lead to diminished rate capability in cells utilizing the silver vanadium oxide material due to undesirable grain growth. Therefore, in general, lower temperatures are preferred in order to limit grain growth in the silver vanadium oxide product. The reaction is preferably carried out in an oxidizing atmosphere that can include air and oxygen, or the reaction may be carried out in an inert atmosphere including for example argon, nitrogen and helium. References related to the art of thermal treatment of silver and vanadium containing component mixtures include:

Von I. Lukacs et al., Zeitschrift fur anorganische Und allgemine Chemie. Band 349 (1967), which reviews thermal treatment of $AgVO_3$ - $V_2O_5$ mixtures and structural studies of the resultant products.

Published European patent application 0 478 302 A2 discloses silver vanadium oxide cathode material for electrochemical cells and prepared by a chemical combination or addition reaction, but it does not disclose carrying out the reaction in a manner so as to provide a preselected desired shape for the electrical discharge characteristics of the electrochemical cell having a cathode containing the silver vanadium oxide.

Another method of the present invention includes vanadium pentoxide ($V_2O_5$) gels produced by the "sol-gel" process. The sol-gel process is known in the art of material sciences (see for example, J. Livage, Chem. Mater. 3:578:593, 1991). Sol-gel synthesis of transition metal oxides may be accomplished by introducing a material into solution and under specific conditions, such as pH, elevated temperatures, or solvent levels, a gel is formed from the species of interest. Typically the synthesis of $V_2O_5$ gels may involve protonation accomplished by adding an acid to a vanadium salt solution or by passing the solution through an ion exchange resin. Preparation of $V_2O_5$ gels by the sol-gel process may result in reduction of vanadium resulting in mixed-valence properties of the gels, and differences in structural orientation or character of the composition resulting in a change in physical and/or electrochemical properties. Thus, utilization of the sol-gel method for cathode formation, as an alternate preparation technique to currently used decomposition reaction processes, allows generation of novel properties of the material and provides different ways of preparing cathodes. Additionally, the evolution of harmful toxic by-product gases is avoided.

References relating to the art of the sol-gel process, and disclosing $V_2O_5$ gels, include the following:

J. Livage et al. (Chem. Mater. 3:578:-593, 1991) reviews synthesis of $V_2O_5$ gels by the sol-gel process, structure studies of the resultant gels, electronic and ionic properties of vanadium oxide thin films deposited from gels, and intercalation of metal or molecular species into $V_2O_5$ gels.

E. Andrukaitis et al. (J. Power Sources 26:475-482, 1989) describe lithium insertion into electrodes composed of $V_2O_5$ deposits formed by either electrophoretic deposition of ammonium hexavanadate monohydrate, or by spreading hydrated $V_2O_5$ gels followed by heating at elevated temperatures.

L. Znaidi et al. (Mat. Res. Bull. 24:1501-1514, 1989) describe the preparation of vanadium bronzes using the sol-gel process with the intercalation of sodium or silver ions, and structural studies of the resultant vanadium bronzes.

It is therefore an object of this invention to provide new and improved methods for preparing a silver vanadium oxide composite cathode for use in high energy density batteries.

It is a further object of this invention to provide improved chemical control for the formation of mixed metal oxide cathode material.

It is still another object of this invention to provide a method for producing thin film cathodes comprising a preparation of silver vanadium oxide, wherein these cathodes require no conductive additive and no binder.

## Summary Of The Invention

The present invention relates to new and improved methods of preparing silver vanadium oxide composite cathode material for use in high energy density batteries. The present invention comprises various methods by which a cathode is formed from materials that include silver vanadium oxide prepared by the chemical addition, reaction or otherwise intimate contact of several metal oxides, preferably during thermal treatment of anhydrous or sol-gel formations in mixed states, and may include an electronic conductor and binder materials. The silver vanadium oxide composite material prepared by the methods of the present invention results in the intercalation of silver ions into starting materials comprising one or more vanadium-containing compounds through intimate contact of a silver-containing component with the vanadium-containing compound, followed by thermal treatment wherein a mixed metal oxide containing both oxidation states of vanadium is formed. Such vanadium-containing compounds include, but are not limited to vanadium oxide salts, polyvanadic acid, silver vanadate and vanadium oxides. The silver-containing component may comprise silver oxide, silver iodide, silver vanadate, silver carbonate, silver metal, or a combination thereof, with silver metal being preferred. The use of silver vanadate as the silver material avoids the liberation of toxic fumes generated by use of silver nitrate, as in the previously discussed decomposition method.

Cathode plates can be formed by an entirely dry pressing procedure thereby enhancing the shelf life of the resulting plates. Alternatively, the procedure can include dropwise addition of liquid electrolyte to the cathode mixture prior to pressing to enhance the performance and discharge rate capability of an assembled cell incorporating the cathode. Yet another process of forming the cathode includes spraying or dip coating the resultant material onto a substrate to form a thin sheet coating of active cathode material.

## Brief Description Of The Drawings

The above and other objects, features, and advantages of the present invention will be apparent in the following detailed description of the preferred embodiments taken in conjunction with the accompanying drawings, in which:

Fig. 1 is a graph showing the discharge curves of a cell containing silver vanadium oxide as a cathode made from $AgNO_3$ and $V_2O_5$ according to the prior art decomposition method.

Fig. 2 is a graph showing the discharge curves of a newly assembled cell containing a cathode produced by the chemical combination or addition reaction of $AgVO_3$ and $V_2O_5$ in accordance with one of the methods of the present invention.

Fig. 3 is a graph showing the discharge curves of electrochemical cells containing silver vanadium oxide as a cathode made from $AgNO_3$ and $V_2O_5$ according to the prior art decomposition method and made from silver powder and vanadium oxide in a chemical addition reaction.

Fig. 4 is a graph showing the discharge curves of a newly assembled cell containing a silver vanadium oxide cathode material produced by the chemical combination or addition reaction of $AgNO_3$ and $V_2O_5$ in accordance with one of the methods of the present invention and in an inert argon atmosphere.

Fig. 5 is a graph showing the discharge curves of a newly assembled cell containing a cathode produced by the chemical combination or addition reaction of $AgVO_3$ and $V_2O_5$ in accordance with the present invention and in an oxidizing atmosphere.

## Detailed Description Of The Invention

One method of the present invention comprises synthesizing silver vanadium oxide from starting materials including a decomposable metal salt, preferably silver vanadate ($AgVO_3$), and vanadium pentoxide ($V_2O_5$). This method comprises intimately combining the starting materials by thoroughly grinding them together to ensure homogeneity, thermally treating the ground mixture, additional combining by further grinding followed by a final thermal treatment of the silver vanadium oxide mixture. A cathode for a high energy density battery is then formed by combining the silver vanadium oxide mixture with an electronic conductor and with a binder material, and finally pressing the composite materials to form a cathode plate. This synthesis avoids the liberation of toxic fumes generated by use of silver nitrate as the silver starting material.

Another method of the present invention comprises preparing vanadium oxide utilizing sol-gel technology. This method comprises intercalating silver cations into the acidified vanadium oxide gel, thermally treating and thereby dehydrating the silver vanadium oxide mixture, combining the mixture with an electronic conductor and with a binder material, and pressing the composite materials to form a cathode plate. Alternately, a thin coating of the resultant active cathode material may be applied, such as via a spray coating technique, to an appropriate substrate material in the formation of a cathode.

Formation of vanadium pentoxide gels by the sol-gel process involves protonation of vanadium species as, for example, by acidification of a vanadium salt solution via passage of the solution through a proton exchange resin. The vanadium salt may comprise metals selected from Group IA of the Periodic Table of the Elements, including lithium, sodium, potassium, etc., and their alloys. $V_2O_5$ gels possess mixed valance properties as a result of some reduction (typically in the range from about 1% to 10%) of vanadium occuring during the synthesis of the gels, and also by subsequent dehydration of the synthesized gel.

Intercalation of silver cations into the layered structure of $V_2O_5$ gels may be accomplished by intimate contact of a silver-containing component with $V_2O_5$ gels followed by thermal treatment wherein a mixed metal oxide is formed. The silver containing component may comprise silver oxide, silver iodide, silver vanadate, silver metal, silver carbonate, or a combination thereof. The intercalation of silver cations involves proton-exchange reactions with acidic protons contained within the $V_2O_5$ gels. Thermal treatment of the silver vanadium oxide mixture serves in part to remove water from the mixture. During the dehydration process, OH bond breaking occurs which, along with the intercalated cation, plays an important role in the evolution of the structural orientation of the resultant crystalline compound. Thus, the electrical charge and properties of the silver vanadium oxide, produced by utilizing sol-gel technology, is influenced by parameters which include the following: the amount of reduced vanadium ions (state of reduction); the extent of intercalation of silver cations (exchange cation content); and the water content remaining after dehydration (the hydration state). Controlled alteration of one or more of these parameters may lead to the formation of mixed metal oxide compositions, comprising silver vanadium oxides, with differences in structural orientation or anisotropic character which can give rise to variations in properties such as electrical conductivity.

A cathode, containing cathode active material prepared by the methods of the present invention, can be used in a nonaqueous lithium battery as described in US-A-4830940; wherein the battery also contains an alkali metal anode, preferably lithium or alloys thereof; a nonaqueous electrolyte which preferably is comprised of a combination of lithium salt and an organic solvent; and a separator material electrically insulating the anode from the cathode while having sufficient porosity to allow for electrolyte flow.

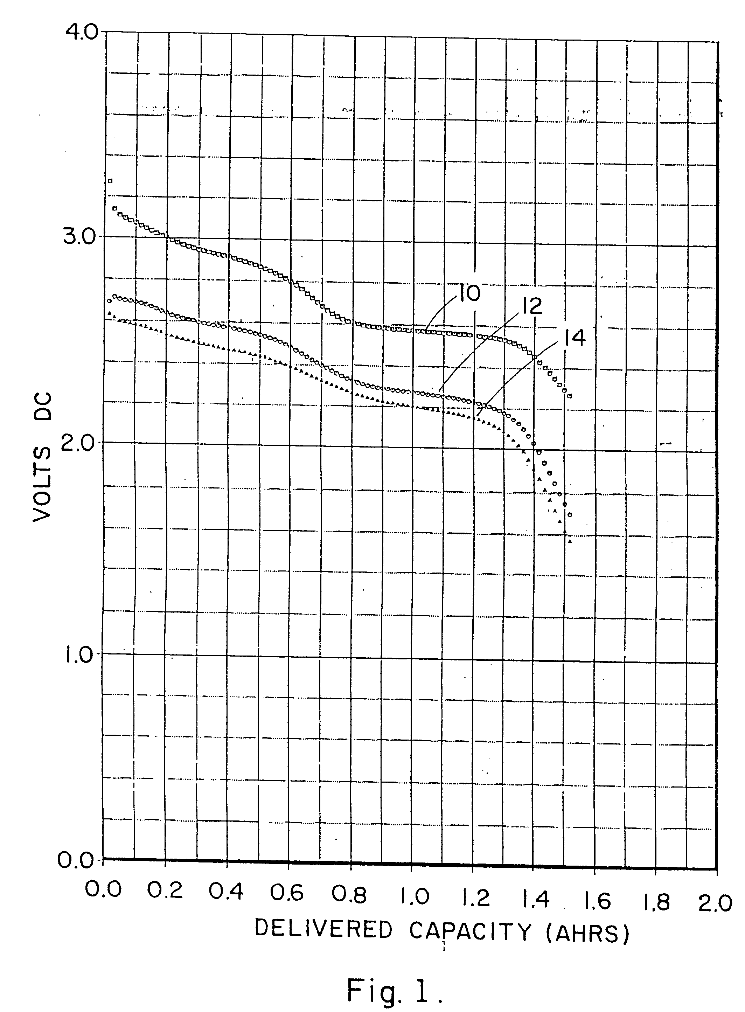

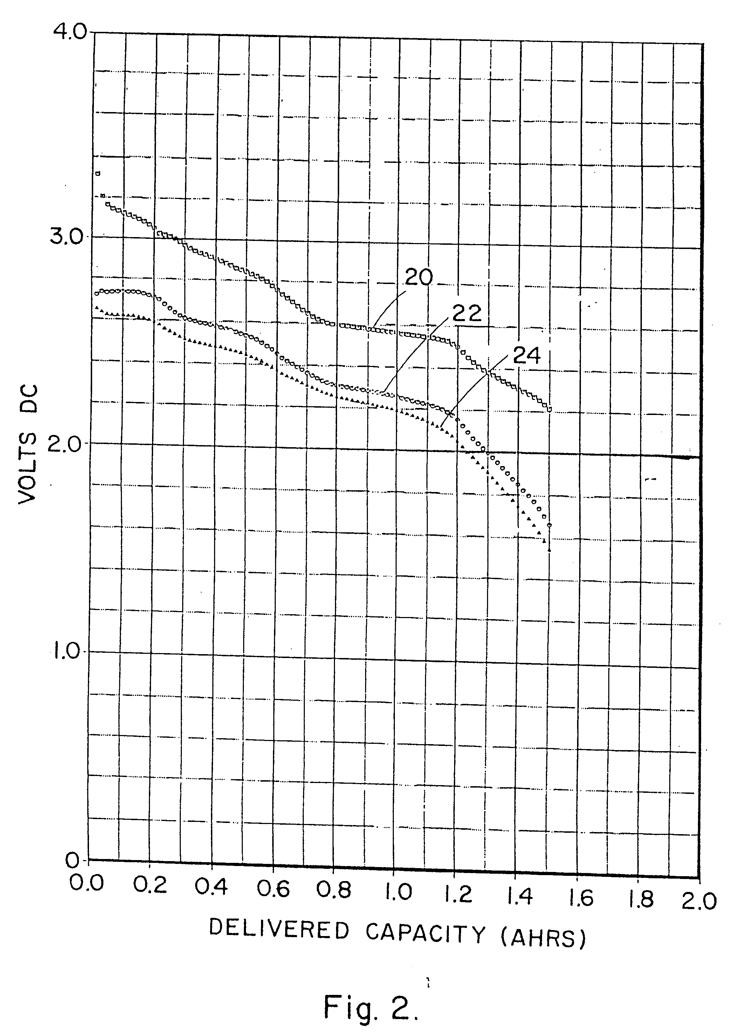

Figs. 1 and 2 illustrate discharge curves from electrochemical cells made according to the prior art decomposition method and according to the present chemical addition reaction, respectively. In particular, the high energy density cell of Fig. 1 contained silver vanadium oxide made by the decomposition of $AgNO_3$ with a vanadium-containing compound according to the prior art while the high energy density cell of Fig. 2 contained silver vanadium oxide made from $AgVO_3$ as the silver-containing component intimately combined with a vanadium-containing compound according to the methods of the present invention. The discharge curves were recorded by applying pulse trains consisting of four ten-second, 1.5 ampere pulses every 15 seconds repeated every 30 minutes to the respective cells wherein in Fig. 1, curve 10 was recorded at open circuit with no load, curve 12 was constructed from the minima of the first pulse of each train and curve 14 was constructed from the minima of the fourth pulse of each train. In comparison, Fig. 2 shows a high energy density cell having a silver vanadium oxide cathode made according to the methods of the present invention wherein curve 20 was recorded at open circuit with no load, curve 22 was constructed from the minima of the first pulse of each pulse train and curve 24 was constructed from the fourth pulse minima of each pulse train. The latter cell of the present invention exhibits flatter plateau regions with less pronounced fall off in discharge approaching end of life in comparison to the former, prior art cell.

An important aspect of the method of the present invention is that it can be carried out in a manner so as to provide a preselected desired shape in the electrical discharge characteristic of the electrochemical cell containing the vanadium oxide composite cathode material. One way of accomplishing this is by varying the silver content of the starting materials.

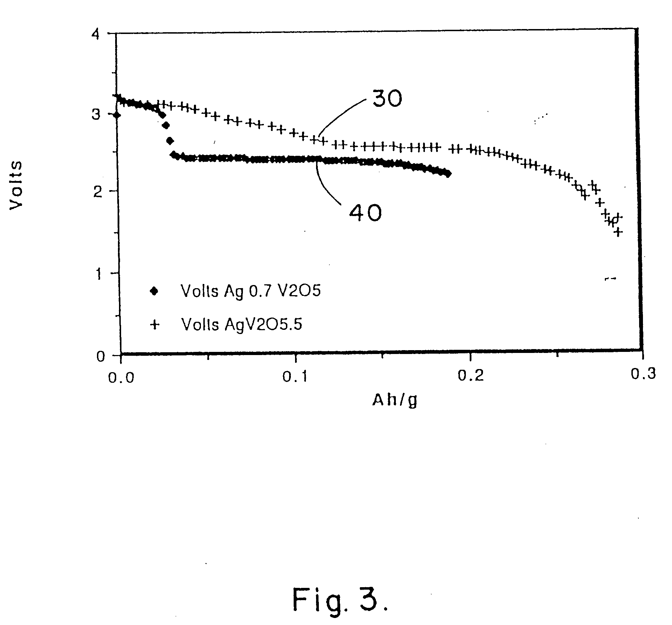

Fig. 3 illustrates the tailoring effect of a discharge curve through manipulation of the silver content of the starting materials, wherein discharge curve 30 exhibits a step shape and is derived from a high energy density cell containing silver vanadium oxide as a cathode made from $AgNO_3$ according to the prior art decomposition method. As previously mentioned, this material has a stoichiometric composition of $AgV_2O_{5.5}$. Curve 40 has a plateau shape and was derived from a high energy density cell having silver vanadium oxide made from an addition reaction of silver powder as the silver-containing component intimately combined with a vanadium-containing compound, followed by thermal treatment to synthesize an oxygen deficient silver vanadium oxide having the stoichiometric composition $Ag_{0.7}V_2O_5$, and without the undesirable toxic by-product gases characteristic of the prior art decomposition method. The difference in the shape of the stepped-shaped discharge curve 30 and the plateau shaped discharge curve 40 shows that by stoichiometrically varying the amount of silver to vanadium present in the mixed metal oxide bronze product, the shape of the resulting discharge curve can be manipulated. Even though the silver content of the present invention is lower than the silver vanadium oxide produced by the decomposition method, this is not a necessity.

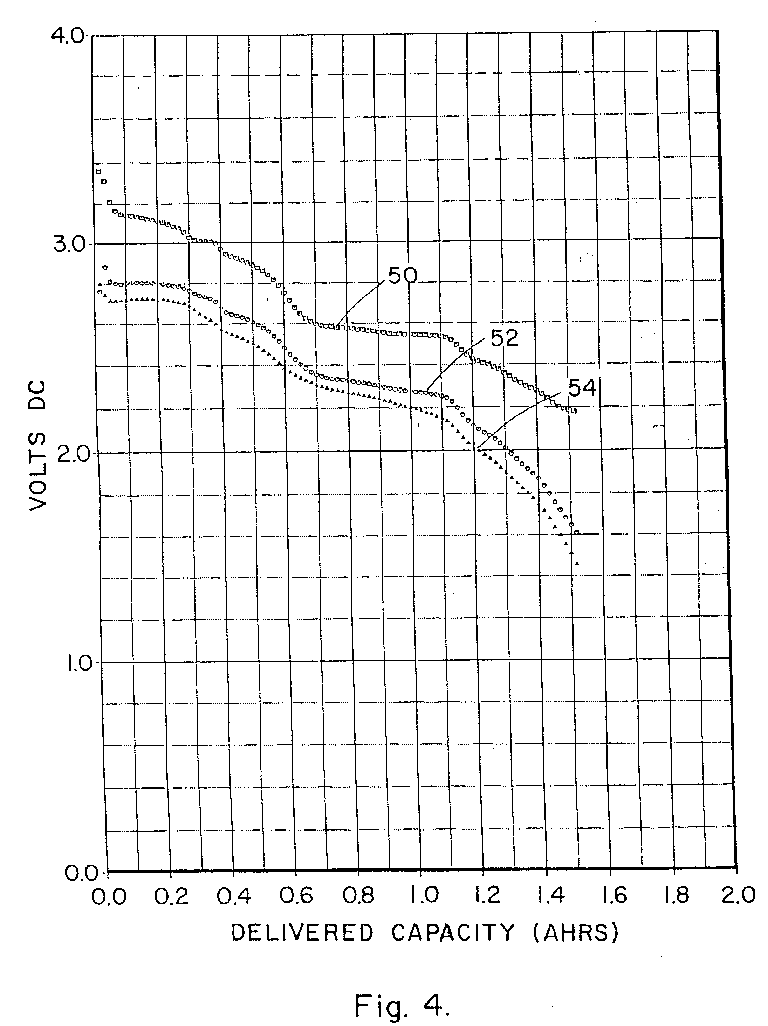

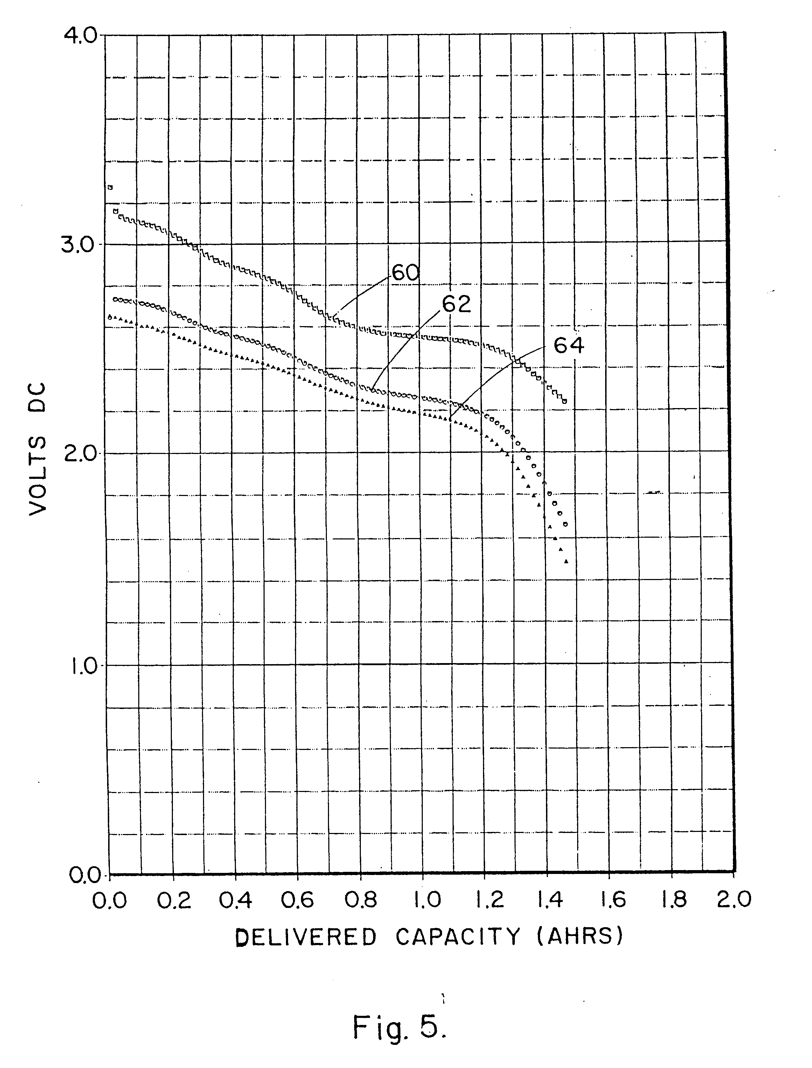

Figs. 4 and 5 show comparative high energy density cells containing silver vanadium oxide made according to the methods of the present invention, wherein the shape of the discharge was tailored by performing the addition reaction under varying atmospheres. Thus, Fig. 4 shows silver vanadium oxide made by an addition reaction of a silver-containing compound and a vanadium-containing compound under an argon atmosphere wherein curve 50 was recorded at open circuit with no load, curve 52 was constructed from the minima of the first pulse of each train and curve 54 was constructed from the minima of the fourth pulse of each train. In comparison, Fig. 5 shows a silver vanadium oxide made by an addition reaction under an oxygen atmosphere wherein curve 60 was recorded at open circuit with no load, curve 62 was constructed from the minima of the first pulse of each pulse train and curve 64 was constructed from the fourth pulse minima of each pulse train. The end of life shape of the respective cells is different with the inert argon atmosphere exhibiting a more flattened and stretched out shape than the cathode material produced in a oxidizing atmosphere, which has a much sharper drop-off. Additional suitable inert atmospheres include nitrogen and helium in addition to argon while suitable oxidizing atmospheres include air in addition to oxygen.

The methods of preparation of silver vanadium oxide composite material for use as cathode active material in a cathode, and an electrochemical cell incorporating the cathode according to the present invention, are illustrated further by the following examples.

EXAMPLE I

A cathode was formed from materials including silver vanadium oxide prepared by intimate contact of the silver containing component with the vanadium-containing compound in the following manner. 12.0g of silver vanadate ($AgVO_3$) was combined with 5.27g of vanadium pentoxide ($V_2O_5$) and the combined ingredients were thoroughly ground and then heated at about 380°C for about 16 hours. The resulting mixture was then reground and baked at about 400°C for about 16 hours to form silver vanadium oxide ($AgV_2O_{5.5}$) according to the present invention. The silver vanadium oxide thus formed was mixed with carbon black and graphite as conductive diluents and polytetrafluoroethylen (PTFE) powder as a binder material to form a depolarizer which was pressed into cathodes for use in electrochemical cells. A cathode comprising 3% conductive materials, 3% PTFE and 94% silver vanadium oxide made according to the method of the present invention was thus prepared. A battery cell was assembled using the foregoing cathode, lithium as the anode, 1M $LiAsF_6$ in propylene carbonate and dimethoxyethane as the electrolyte and a microporous polymer sheet as a separator. The resulting cell delivered 0.224 Ah/g to a 2V cut-off.

EXAMPLE II

A cathode was formed from materials including silver vanadium oxide prepared by the sol-gel process in the following manner. Polyvanadic acid was prepared by passing 25 ml of a 0.9M solution of sodium vanadate ($NaVO_3$) through an activated sample of DOWEX 50 x 2-100 ion exchange resin. The polyvanadic acid was dehydrated to form $V_2O_5$ which was ground with $12.0_g$ of $AgVO_3$ to intimately combine the ingredients. The $AgVO_3/V_2O_5$ mixture was then heated at 380° for about 16 hours. The resulting mixture was then reground and baked at about 400°C for about 16 hours to form silver vanadium oxide according to the present invention. The silver vanadium oxide thus formed was mixed with carbon black and graphite as conductive diluents and PTFE powder as a binder material to form a depolarizer which was pressed into cathodes for use in electrochemical cells. A cathode comprising 3% conductive materials, 3% PTFE and 94% silver vanadium oxide made according to the method of the present invention was thus prepared. A battery cell was assembled using the foregoing cathode, lithium as the anode, 1M $LiAsF_6$ in propylene carbonate and dimethoxyethane as the electrolyte and a microporous polymer sheet as a separator. The open circuit voltage of the cell was 3.82V.

EXAMPLE III

A cathode was formed from materials including silver vanadium oxide prepared by the sol-gel process in the following manner. Polyvanadic acid was prepared by passing 25 ml of a 0.9M solution of sodium vanadate ($NaVO_3$) through an activated sample of DOWEX 50 x 2-100 ion exchange resin. The polyvanadic acid slurry was mixed with 5.27g of $AgVO_3$ and the resulting slurry was baked at 250°C for 17 hours to form silver vanadium oxide according to the present invention. The silver vanadium oxide thus formed was mixed with carbon black and graphite as conductive diluents and PTFE powder as a binder material to form a depolarizer which was pressed into cathodes for use in electrochemical cells. A cathode comprising 3% conductive materials, 3% PTFE and 94% silver vanadium oxide made according to the method of the present invention was thus prepared. A battery cell was assembled using the foregoing cathode, lithium as the anode, 1M $LiAsF_6$ in propylene carbonate and dimethoxyethane as the electrolyte and a microporous polypropylene sheet as a separator. The cathode weighed 2.0g and the open circuit voltage of the cell was 3.82 V.

EXAMPLE IV

A cathode is formed from materials including silver vanadium oxide prepared by the sol-gel process in the following manner, Polyvanadic acid is prepared by passing 25 ml of a 0.9M solution of sodium vanadate ($NaVO_3$) through an activated sample of DOWEX 50 x 2-100 ion exchange resin. The polyvanadic acid is mixed with 5.27g of $AgVO_3$ and the resulting slurry is baked at about 350°C for about 8 hours to form silver vanadium oxide. The silver vanadium oxide thus formed may be mixed with binder and conductor materials comprising carbon and PTFE to form a depolarizer which can be pressed into cathodes for use in electrochemical cells.

EXAMPLE V

A silver vanadium oxide gel is prepared according to the method of the present invention as illustrated in Example IV. The resulting gel is made less viscous by the addition of water until the consistency is amendable to aspiration through an air spray gun. The gel of reduced viscosity may then be sprayed using a spray coating technique onto a metal foil substrate which is held at temperatures ranging from 140°C to 375°C. The coated substrate is baked at 375°C to form silver vanadium oxide according to the present invention. The silver vanadium oxide coated substrate may then be cut to the desired size and used directly as a cathode in assembling a battery cell.

The above detailed description and examples are intended for the purposes of illustrating the invention and are not to be construed as limiting. For example, depending on the application of the electrochemical cell, the range of cathode compositions used can vary from 100% silver vanadium oxide to 80% silver vanadium oxide with 10% carbon/graphite and PTFE or other suitable conductor and binding materials known in the art.

The invention can be embodied otherwise without departing from the principles thereof, and such other embodiments are meant to come within the scope of the present invention as defined by the appended claims.

**Claims**

1. A method of preparing a cathode for an electrochemical cell having an alkali metal anode, wherein the cathode contains as active material silver vanadium oxide prepared by chemical addition or reaction and in a manner that brings about intimate contact of starting materials, which comprises:
   a) combining the starting materials comprising at least one silver-containing component with at least one vanadium-containing compound to form an intimate combination of the starting materials comprising an anhydrous mixed metal oxide;
   b) thermally treating the anhydrous mixed metal oxide to thereby form the silver vanadium oxide material;
   c) utilizing the silver vanadium oxide to form a cathode for the electrochemical cell; and either or both of
   d) selecting the silver-containing component in step (a) to have a silver content that provides the intimate combination with a desired shape in the electrical discharge characteristics of the electrochemical cell, and
   e) effecting the thermal treatment of step (b) in an atmosphere selected to aid the chemical addition or reaction to provide a desired shape in the electrical discharge characteristics of the electrochemical cell.

2. A method as claimed in claim 1 wherein the thermal treatment of the anhydrous mixed metal oxide of step b) comprises a first step comprising baking the mixed metal oxide, a second step of grinding the mixed metal oxide and a third step of further baking the mixed metal oxide.

3. A method as claimed in claim 2 wherein the first step comprising the thermal treatment of the anhydrous mixed metal oxide comprises baking the mixed metal oxide at a temperature of between 300°C to 400°C for a time of between about 2 hours to 24 hours and the third step comprises baking the mixed metal oxide at a temperature of between about 300°C to 550°C for a time of between about 2 hours to 24 hours.

4. A method as claimed in any preceding claim wherein the cathode is formed by pressing the silver vanadium oxide into a desired shape.

5. A method of preparing a cathode for an electrochemical cell having an alkali metal anode, wherein the cathode contains as active material silver vanadium oxide prepared by the chemical addition or reaction and in a manner that brings about intimate contact of starting materials, which comprises:
   a) combining the starting materials comprising at least one silver-containing component with at least one vanadium-containing compound to form an intimate combination of the starting materials comprising a mixed metal oxide incorporated into a gel solution;
   b) thermally treating the mixed metal oxide incorporated into the gel solution to thereby form the silver vanadium oxide material; and
   c) utilizing the silver vanadium oxide to form a cathode for the electrochemical cell.

6. A method as claimed in claim 5 wherein the silver-containing component is preselected to have a silver content that provides the intimate combination with a desired shape in the electrical discharge characteristics of the electrochemical cell.

7. A method as claimed in claim 5 or claim 6 wherein the thermal treatment of step b) is carried out in an atmosphere selected to aid the chemical addition or reaction to provide the preselected desired shape in the electrical discharge characteristics of the electrochemical cell.

8. A method as claimed in any one of claims 5 to 7 wherein the thermal treatment of the mixed metal oxide incorporated in the gel solution of step b) comprises a single step comprising baking the gel for a time ranging from about 2 hours to about 24 hours at a temperature ranging from about 300°C to about 500°C.

9. A method as claimed in any one of claims 5 to 8 wherein the gel comprised of a mixed metal oxide is first diluted by addition of a suitable liquid prior to being applied by a spray coating technique to a substrate to form a thin sheet coating of active cathode material.

10. A method as claimed in claim 9 wherein the thin sheet coating is desirably a thickness of about 0.01 inch or less.

11. A method as claimed in any preceding claim wherein the thermal treatment is carried out in an oxidizing atmosphere.

12. A method as claimed in any preceding claim wherein the thermal treatment is carried out in an inert atmosphere selected from argon, nitrogen and helium.

13. A method as claimed in any preceding claim wherein the silver-containing component is selected from silver iodide, silver oxide, silver vanadate, silver metal, silver carbonate and combinations thereof.

14. A method as claimed in any preceding claim wherein the vanadium-containing compound is selected from vanadium oxide salts, silver vanadate, polyvanadic acid, vanadium oxide, and combinations thereof.

15. A method as claimed in claim 7 wherein the vanadium salt contains an alkali metal selected from lithium, sodium, and potassium.

16. A method as claimed in any preceding claim wherein the cathode comprises between about 80 weight percent to about 99 weight percent silver vanadium oxide.

17. A method as claimed in any preceding claim wherein the forming of the cathode of step c) further comprises the addition of binder and conductor materials.

18. A method as claimed in claim 12 wherein the cathode is comprised of between about 0 to 3 weight percent carbon, between about 0 to 3 weight percent fluororesin powder, and between about 94 and 99 weight percent silver vanadium oxide.

19. A method as claimed in any preceding claim wherein the forming of the cathode of step c) further comprises the dropwise addition of a liquid electrolyte.

20. A nonaqueous electrochemical cell comprising a cathode, an alkali metal anode and a nonaqueous electrolyte comprising a combination of an organic solvent and a lithium salt, characterised in that said cathode is obtained by a method as claimed in any one of claims 1 to 19.

**21.** An electrochemical cell as claimed in claim 20 wherein the anode is comprised of lithium.

Fig. 1.

Fig. 2.

Fig. 3.

Fig. 4.

Fig. 5.